# DEMANDE DE BREVET EUROPEEN

(11) **EP 0 630 800 A1**
(43) Date de publication de la demande: **28.12.1994**
(21) Numéro de dépôt: 94109340.3
(22) Date de dépôt: 17.06.1994
(51) Int. Cl.: B62D 5/04, B60R 25/02

(54) **Dispositif de direction assistée électrique à verrou de colonne de direction**

(30) Priorité: 21.06.1993 FR 9307477
(71) Demandeur: VALEO ELECTRONIQUE, 94000 Creteil (FR)
(72) Inventeur: Tranchon, Georges, F-94000 Creteil (FR)
(74) Mandataire: Gamonal, Didier

(57) **Abrégé**

Dispositif de direction assistée électrique à verrou de colonne de direction.

L'invention concerne le regroupement de la fonction de direction assistée et d'antivol de colonne de direction.

Selon l'invention, un système de blocage mécanique permet d'immobiliser la colonne de direction. Dans un mode de réalisation particulier, l'organe de blocage agit par un organe de blocage mécanique (38) sur les dents périphériques (42) d'une roue dentée (34) servant d'organe d'accouplement à l'actionneur (30-33) d'assistance de direction.

## Description

La présente invention concerne un dispositif de direction assistée de véhicule dans lequel la colonne de direction peut recevoir un verrou, par exemple pour assurer la fonction antivol.

Dans l'art antérieur, on connaît des dispositifs de direction assistée de véhicule qui comportent principalement :
- une colonne de direction dont une première extrémité porte un volant de direction manipulé par le conducteur et dont une seconde extrémité est solidaire d'un dispositif de braquage, par exemple constitué d'un montage à pignon et crémaillère ;
- un capteur de couple qui permet de mesurer le couple exercé par le conducteur sur la colonne de direction ;
- un motoréducteur composé d'un moteur électique et d'un réducteur, par exemple à roue et vis sans fin, dont la roue de sortie attaque un organe d'accouplement disposé entre le motoréducteur et la colonne ;
- un calculateur qui reçoit les signaux de mesure de divers capteurs, notamment du capteur de couple précité, et qui élabore un signal de commande de l'alimentation du moteur électrique du motoréducteur d'assistance ; de façon à assister l'effort exercé par le conducteur sur le volant.

En particulier, de tels systèmes utilisent aussi un capteur de vitesse de véhicule pour faire varier l'asistance en fonction de la vitesse du véhicule, un capteur de régime moteur, quand le véhicule est doté d'un moteur thermique, et d'un capteur d'angle de braquage par exemple pour reconnaitre le point neutre de braquage ou les extrémités des courses de braquage.

On connait aussi divers systèmes antivol qui permettent, à l'aide d'un verrou, motorisé ou non, de bloquer la colonne de direction, de façon à empêcher la conduite du véhicule sans la possesion d'un moyen de déverrouillage.

Dans un tel système antivol, le verrou permet de déplacer une partie mobile d'une position inactive à une position active dans laquelle on vient bloquer la colonne de direction. Il est clair qu'un tel dispositif doit être efficace contre les agressions des voleurs, mais aussi ne pas présenter de risques pour l'utilisateur autorisé quand le véhicule se déplace.

Il est connu de placer tant le dispositif de direction assistée que le système antivol sur la colonne de direction, par exemple dans l'habitacle.

Dans une telle configuration du véhicule, une conception compacte est souhaitable et un besoin s'est fait jour dans l'état de la technique pour un tel dispositif.

C'est un objet de la présente invention de proposer un dispositif de direction asistée électrique, qui intègre de façon compacte et unitaire un verrou de blocage de la colonne de direction tout en respectant de strictes conditions de sécurité.

L'invention concerne en effet un dispositif de direction assistée électrique qui comporte principalement :
- une colonne de direction dont une première extrémité porte un volant de direction manipulé par le conducteur et dont une seconde extrémité est solidaire d'un dispositif de braquage, par exemple constitué d'un montage à pignon et crémaillère ;
- un motoréducteur composé d'un moteur électique et d'un réducteur, par exemple à roue et vis sans fin, dont la roue de sortie attaque un organe d'accouplement disposé entre le motoréducteur et la colonne ;
- un calculateur qui reçoit les signaux de mesure de divers capteurs, comme ceux d'un capteur de couple qui permet de mesurer le couple exercé par le conducteur sur la colonne de direction, et qui élabore un signal de commande de l'alimentation du moteur électrique du motoréducteur d'assistance ; de façon à assister l'effort exercé par le conducteur sur le volant. L'invention se caractérise en ce que la direction assistée comporte de plus un système antivol qui permet, à l'aide d'un verrou, de bloquer la colonne de direction, système antivol comportant un moyen de déplacement d'une partie mobile qui, dans une première position active vient augmenter l'inertie du dispositif d'assistance, et qui dans une seconde position inactive, libère le dispositif d'assistance.

Dans un mode de réalisation, le système antivol verrouille une partie mobile du, ou solidaire du, motoréducteur d'assistance de direction.

Dans un autre mode de réalisation, le système antivol verrouille une partie mobile de l'organe d'accouplement du motoréducteur sur la colonne de direction.

Dans un autre mode de réalisation, le système antivol ajoute une inertie sur la colonne de direction par l'intermédiaire du dispositif d'assistance de direction.

D'autres caractéristiques et avantages de l'invention seront mieux compris à l'aide de la description et des figures annexées qui sont :
- la figure 1 : un mode de réalisation d'une direction assistée électrique de l'art antérieur ;
- la figure 2 : un mode de réalisation d'un système antivol pour colonne de direction selon l'art antérieur ;
- la figure 3 : un mode de réalisation d'un dispositif de direction assistée électrique incorporant un système antivol de colonne de direction selon l'invention ;
- la figure 4 : un détail d'une partie de la figure 3 ;
- les figures 5 et 6 : des vues de face et de coté d'un mode de réalisation d'un dispositif de direction assistée électrique selon l'invention.

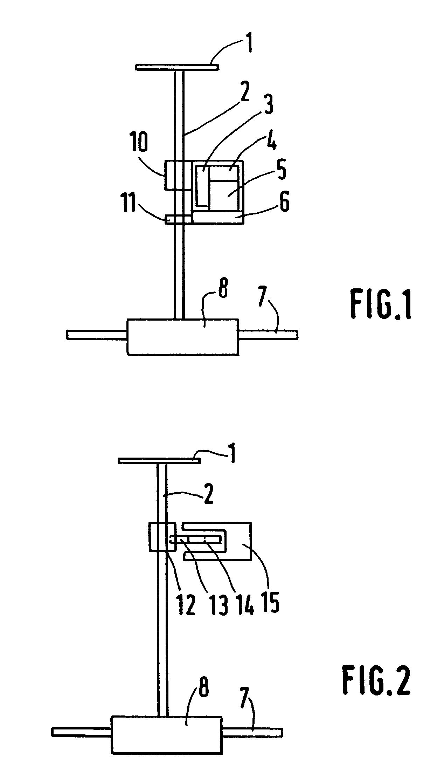

A la figure 1, on a représenté un dispositif de de direction assistée de véhicule selon l'art antérieur.

Le véhicule équipé du dispositif de direction assistée électrique comporte notamment une colonne de direction 2 dont une première extrémité porte le volant de direction ou de braquage 1 et l'autre extrémité comporte un mécanisme 8 de transformation du mouvement de rotation de la colonne 2 en un mouvement de braquage d'un organe 7 de translation qui transmet l'effort de braquage vers les roues directrices.

Classiquement, l'organe de transformation du mouvement de braquage en un mouvement de translation comporte un pignon 8 engrené sur les dents d'une crémaillère 7.

Pour assister l'effort du conducteur, un dispositif de direction assistée électrique comporte classiquement un capteur de couple de braquage 10 disposé sur la colonne de direction 2. Le signal de mesure du capteur de mesure 10 est fourni à un calculateur 3 qui reçoit d'autre part des signaux destinés à détecter l'état de fonctionnement du véhicule, comme sa vitesse de déplacement ou encore le régime du moteur thermique, et qui commande l'alimentation d'un actionneur 5,6,11 comportant principalement un moteur 4' dont l'arbre de sortie est connecté à l'arbre d'entrée d'un embrayage 5, l'arbre de sortie de l'embrayage 5 étant connecté à l'arbre d'entrée d'un réducteur 6.

En particulier, dans ce type de dispositif de direction assistée électrique, l'assistance n'est déclenchée qu'après l'embrayage et l'alimentation du moteur électrique. Dans ce cas, l'organe de sortie du réducteur 6 attaque un pignon 11 ou un dispositif du même genre monté sur la colonne de direction 2 et ajoute l'effort de l'actionneur 4,5,6 à l'effort de braquage du conducteur qui en est ainsi réduit. Quand l'effort de braquage exercé par le conducteur s'annule, le capteur de couple redescend à l'état inactif et l'assistance cesse. Le sens de braquage influe bien entendu sur le sens de rotation du moteur d'assistance.

Dans l'état de la technique, on sait déjà constituer sous une forme compacte ce type de dispositif de direction assistée électrique. En particulier, ce dispositif peut être installé ou bien à proximité de l'organe 8 à l'intérieur du compartiment moteur, ou au contraire près du volant à proximité ou dans l'habitacle.

Ces dispositifs sont en général constitués de manière étanche et ne produisent, surtout quand ils sont dans l'habitacle, qu'un faible niveau de bruit.

A la figure 2, on a représenté un autre dispositif, celui-ci constitué par un système antivol de colonne représenté très schématiquement.

Un tel dispositif antivol comporte un organe de blocage 12 monté sur la colonne par exemple constitué par un cylindre à gorge. D'autre part, un actionneur 15 est monté stationnaire par rapport à la rotation de la colonne de direction 2 et comporte un élément mobile 14 qui, quand le système antivol est activé, se trouve engagé (position 13) dans la gorge correspondante du cylindre 12. Dans ce cas, la colonne de direction est bloquée. Bien entendu, le dispositif 15 est activé par un organe de verrouillage et déverrouillage constitué par exemple par une serrure ou par un lecteur de badge ou de transpondeur radio-fréquence.

Le système antivol est disposé en général au moins partiellement à l'intérieur de l'habitacle.

On conçoit donc que, quand le véhicule est équipé à la fois d'un système antivol et d'un dispositif de direction assistée électrique, la colonne de direction devrait comporter successivement le long de la colonne de direction 2 deux dispositifs. De ce fait, l'encombrement devient important et, dans certaines architectures de véhicule, devient pratiquement impossible.

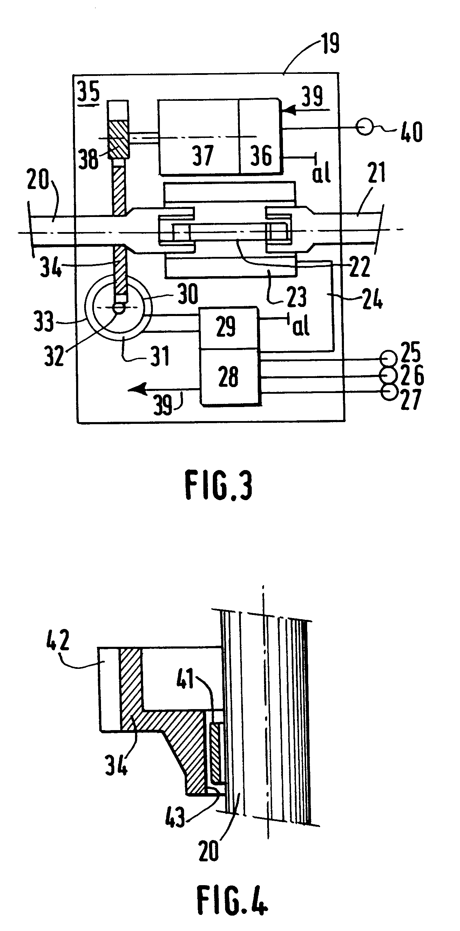

Selon l'invention, représentée dans un mode de réalisation à la figure 3, le problème est résolu en ce que le dispositif de direction assistée électrique et le système antivol sont largement disposés à l'intérieur d'un seul et même boitier 19. A cet effet, la colonne de direction est constituée par un arbre 20,21. La partie 20 de l'arbre est une partie de sortie du dispositif de l'invention. La partie 21 est une partie d'entrée du dispositif selon l'invention.

Ces deux parties 20 et 21 constituent deux demi-arbres qui composent classiquement la colonne de direction 2 à la figure 1 ou 2.

Ces deux demi-arbres 20 et 21 sont reliés par des moyens convenables ici constitués par une barre de torsion 22 qui tend à conserver l'orientation angulaire relative en rotation des deux demi-arbres 20 et 21. En particulier, quand le demi-arbre 21, dont l'extrémité non représentée est connectée au volant de braquage, reçoit un effort de braquage de la part du conducteur, la barre de torsion se déforme et transmet avec un certain retard l'effort de braquage au second demi-arbre de sortie 20 dont l'autre extrémité est connectée à l'organe de braquage (8 par exemple aux figures 1 et 2). La déformation ou le début de déformation de la barre de torsion 22 est mesurée par un capteur de couple 23 qui en général, mesure la différence de rotation instantanée entre les deux demi-arbres 20 et 21.

Le signal de sortie 24 du capteur de couple 23 est transmis à l'entrée d'un calculateur de direction assistée 28. Le calculateur 28 reçoit respectivement le signal 25 d'un capteur de vitesse de véhicule, le signal 26 d'un capteur de régime moteur thermique, et un signal 27 d'autres capteurs d'attitude du véhicule par exemple.

La sortie du calculateur 28 est connectée à l'entrée d'un circuit de puissance 29 qui reçoit, par une borne al, l'énergie électrique par exemple provenant de l'ensemble batterie et alternateur du véhicule. Le circuit de puissance convertit la puissance transmise par cet ensemble al en une puissance admissible par l'actionneur 30-33. Cet actionneur est, comme indiqué à la figure 1, constitué par un moteur 31, dont la sortie est connectée à un embrayage 30 et dont la sortie est connectée à un réducteur 32 constitué ici par une vis sans fin.

Ainsi l'actionneur reçoit deux sources d'énergie du circuit de puissance 29, la première destinée au moteur 31 et la seconde destinée à l'embrayage 30. Classiquement un tel embrayage est constitué par un embrayage électromagnétique à friction. La vis de sortie 32 est engagée sur les dents d'une roue 34 dont le centre est passé autour de l'arbre de sortie 20.

Le dispositif fonctionne comme on l'a indiqué à la figure 1.

Selon l'invention, afin de regrouper les deux fonctions respectivement de direction assistée et d'antivol de colonne, le dispositif de l'invention comporte ensuite un système antivol 35 composé notamment d'un actionneur électrique 36,37 et d'un organe de blocage mécanique 38 déplacé par l'actionneur 36,37. L'actionneur comporte un circuit de pilotage 36 qui reçoit un signal d'activation 39 produit par le calculateur de direction assistée 28. Ce signal 39 permet de tenir compte du fait que la direction assistée n'est pas en action, pour activer le système antivol.

Le circuit de pilotage 36 comporte ensuite une entrée d'un signal 40 provenant par exemple d'une serrure d'antivol non représentée. Quand les signaux 39 et 40 sont à l'état haut, le circuit de pilotage fournit l'alimentation électrique al à un moteur électrique, éventuellement muni d'un réducteur convenable 37, de façon à faire passer l'organe de blocage 38 de la position inactive à la position active. Dans la position inactive représentée à la figure 3, les dents de la roue 34 sont libérées et peuvent tourner librement avec le mouvement de braquage imprimé sur la colonne de direction 20,21.

Dans la position active, l'organe de blocage mécanique 38 bascule et vient emprisonner une ou plusieurs dents de la roue 34. Puis, le système antivol 35 reste dans la position active et l'alimentation du moteur 36 est éteinte.

Quand le conducteur ou la personne autorisée émet le signal 40 d'activation du système antivol, le circuit de pilotage 36 détecte que le dispositif de direction assistée électrique n'est pas activé et fournit à nouveau une alimentation électrique au motoréducteur 37. Le motoréducteur 37 imprime un nouveau mouvement à l'organe de blocage mécanique 38 qui passe de la position active à la position inactive.

A la figure 4, on a représenté un mode de réalisation de la roue 34 qui permet de protéger les dents 42 de la roue 34 d'efforts trop violents. En effet, si un choc très violent est imprimé sur la colonne de direction, une fois le système antivol en position acitve, les dents de la roue 34 pourraient être arrachées. Dans ce cas, le dispositif de direction assistée électrique serait probablement endommagé ou rendu largement inopérant.

Afin de porter remède à cet inconvénient, la roue dentée 34 présente un alésage 43 dans lequel est montée une bague 41 de limitation du couple exercé par la roue 34 à l'arbre 20.

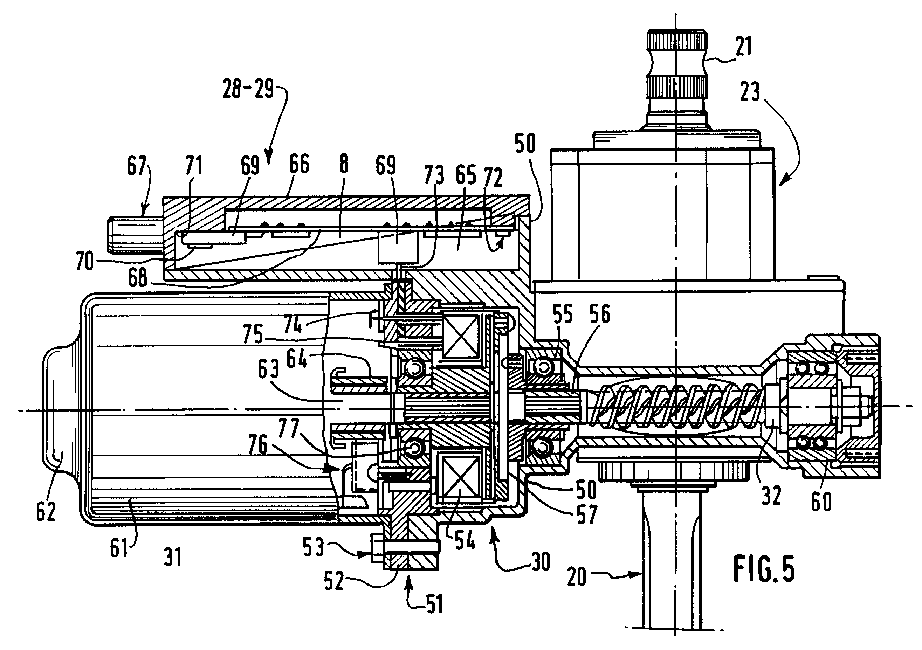

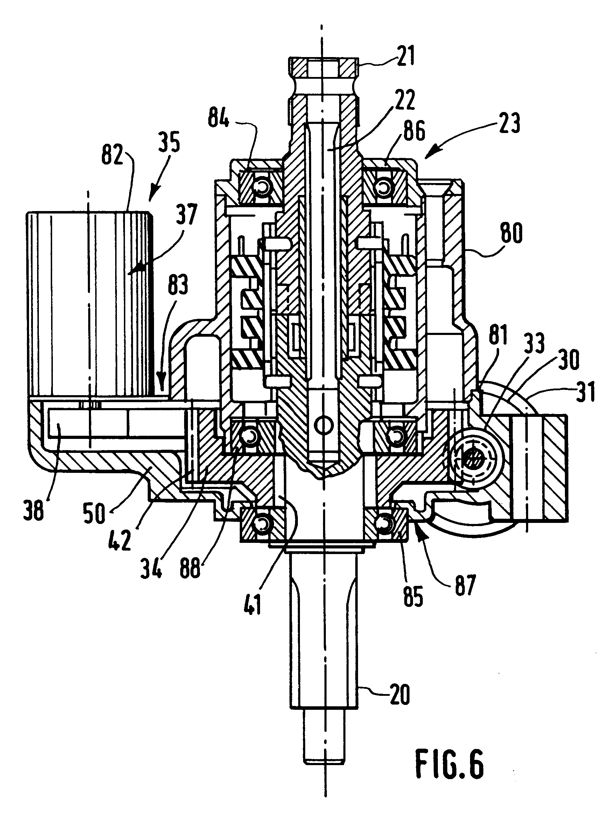

Aux figures 5 et 6, on a représenté un mode préféré de réalisation d'un dispositif selon l'invention. A la figure, les éléments portant les références des éléments correspondants des figures 1 à 4 ne sont pas décrits plus en détail.

A la figure 5, on a représenté avec des éclatés partiels, les principaux composants d'un mode de réalisation du dispositif de l'invention.

La vis 32 est montée par des paliers respectivement 55 et 60 à l'intérieur d'un boitier par exemple réalisé en un matériau moulé. Ce boitier 50 présente, à sa partie gauche au dessin, une face 51 de liaison avec un flasque 52 qui porte les parties actives de l'embrayage 30. Le flasque 52 et le boitier 50,51 sont liés par trois vis comme la vis 53. De même, le moteur 31 comporte une carcasse 61, par exemple de type roulé, dont l'extrémité gauche 62 porte une rotule non représentée montée à l'extrémité de l'arbre rotor 63 non représenté lui-même dont l'autre extrémité porte un collecteur d'alimentation 64 du rotor bobiné.

Les autres éléments constitutifs du moteur 31 ne sont pas représentés.

Sur la partie haute du dessin, un boîtier est formé en deux parties respectivement 65 et 66. A l'intérieur de ce boîtier se trouve constitué l'ensemble composé du calculateur 28 et du circuit d'alimentation ou de puissance 29.

La moitié 65 du boîtier est constituée par l'extrémité de la pièce moulée 50 servant de boîtier ou carter à l'embrayage et à la vis 32. La seconde moitié 66 est réalisée en un matériau moulé semblable et comporte un connecteur de sortie 67 qui reçoit notamment les signaux 25 à 27 de la figure 3.

Le demi-boîtier 66 porte ensuite au moins un circuit imprimé 68 qui porte les différents composants réalisant les circuits 28 et 29 ainsi que le circuit de pilotage du système antivol. Il porte notamment un connecteur 69 de liaison électrique d'une part au moteur électrique 31 et d'autre part à la bobine 54 de l'embrayage électromagnétique 30.

Le circuit imprimé 68 porte aussi des éléments de puissance statique comme des transistors 69 qui sont vissés par des vis 70 sur une zone plate 71 à l'intérieur de la demi-boîte 66 qui sert de zone de radiateur de chaleur.

De plus, le boîtier 66 sert à la continuité des masses électriques de puissance.

Le circuit imprimé 68 est vissé par des vis 72 au boîtier 66. Les deux demi-boîtiers 65 et 66 sont liés par des moyens convenables comme des clips ou un système à vis.

Le connecteur 69 comporte une pluralité de traverses conductrices comme la traverse 73, qui viennent en liaison électrique à travers un trou pratiqué entre le flasque 52 et la carcasse 61. Ces traverses 73 débouchent notamment sur l'extrémité correspondante de traverses 74 et 75 d'alimentation de la bobine 54 de l'embrayage électromagnétique 30 et 76 d'alimentation des balais en contact avec le collecteur 64 du moteur électrique 31. On remarque que l'arbre du rotor 63 constitue la même pièce que l'arbre d'entrée de l'embrayage 30, tandis que l'arbre de sortie 56 vient de matière avec la vis 32.

D'autre part, l'embrayage électromagnétique 30 comporte du côté de l'arbre d'entrée un roulement 77.

A la figure 6, on a représenté une autre vue du dispositif de l'invention dans laquelle est visible le système antivol 35.

Sur la base du boîtier 50 déjà décrit à la figure 5, on vient disposer un autre boîtier dans un matériau moulé similaire 80 dans lequel se trouve le capteur de couple 23. Le boîtier 80 vient sur les bords convenablement usinés du boîtier 80 de façon à constituer une liaison étanche et permanente. D'autre part, le système antivol 35 comporte une carcasse 82 à l'intérieur de laquelle se trouve le moteur 37, et qui est monté par un flasque 83 d'une part sur l'extrémité du boîtier 80 et l'extrémité du boîtier 50. La fixation du flasque 80 sur les deux boîtiers 50 et 80 n'est pas représentée et est à la portée de l'homme de métier.

Par cette constitution, on parvient à obtenir un dispositif intégral incorporant les fonctions de direction assistée électrique et d'antivol de colonne.

Enfin les arbres 20 et 21 de la colonne de direction sont montés sur des roulements à billes respectivement 84 et 85 respectivement montés dans un chapeau 86 du boîtier 80 et dans un logement 87 du boîtier 50.

Un roulement à billes 88, logé dans l'alésage de la roue 32, permet de maintenir radialement l'arbre de sortie du capteur de couple avec un couple résistant aussi réduit que possible.

L'organe de blocage mécanique 38 est constitué par un secteur denté qui, en état de repos, est appliqué sur la roue de sortie 38 et empêche sa rotation. Lorsque l'utilisateur actionne l'antivol, l'élément de blocage 38 pivote en libérant la roue de sortie 34.

Dans d'autres modes de réalisation, la couronne dentée 38 qui sert à bloquer la colonne est associée à la vis 33 du réducteur. Le réducteur est alors bloqué quand un solénoïde n'est pas alimenté (comme le moteur 37) et qu'un doigt mobile (analogue à l'organe de blocage 38) vient en contact avec la couronne dentée disposée sur la vis du réducteur.

La commande de l'antivol de l'invention est exécutée comme suit. A la coupure du contact par une clé mécanique, ou lors de la sortie du véhicule de l'utilisateur porteur d'un badge RF par exemple, l'antivol passe à l'état de repos qui est l'état bloqué.

A l'inverse, quand l'utilisateur met le contact, ou lorsqu'un module interrogateur détecte la présence d'un badge autorisé, l'antivol passe à l'état actif dans lequel l'antivol est débloqué.

Dans un mode de réalisation, le système exécute un diagnostic de défaillance de l'antivol. Alors que le système est à l'état de repos, en état bloqué, le dispositif de direction assistée est activé en mode diagnostic de façon à produire une impulsion d'assistance produisant un couple de braquage suffisant pour que soit détecté à l'aide d'un capteur d'angle volet le fait que la colonne de direction a tourné. Si le calculateur du dispositif détecte un tel braquage, il en déduit que le système antivol, bien que placé à l'état de repos, ne se trouve pas dans l'état de blocage de la colonne et le calculateur produit une alarme.

Dans un autre mode de diagnostic, après la mise sous tension, l'antivol étant présumé mis à l'état actif débloqué, le calculateur de direction commande la production d'une impulsion d'assistance qui produit un couple de braquage suffisant pour détecter à l'aide d'un capteur d'angle volant que la colonne de direction a tourné. Si le calculateur du dispositif détecte un tel braquage, il en déduit que le système antivol est bien inopérant. Dans le cas contraire, le calculateur d'assistance de direction se place en mode défaillance et peut, notamment, interdire le démarrage du véhicule, dont la colonne est bloquée.

Dans un mode de réalisation, pour le diagnostic à l'état bloqué ou à l'état débloqué de l'antivol, le capteur d'angle volant peut être remplacé par le capteur de couple déjà décrit précédemment à titre de moyen de détection de l'état libéré de la colonne de direction.

En effet, à l'état bloqué de la colonne de direction, l'impulsion d'assistance est suffisante pour exercer un couple qui n'est pas suffisant pour détruire l'antivol, mais qui produit cependant un signal de détection de couple sur le capteur de couple, même si le volant est libre mais que l'antivol est libéré. Dans ce cas ce signal de détection permet aussi de détecter l'état libéré de la colonne.

## Revendications

1. Dispositif de direction assistée électrique qui comporte principalement :
- une colonne de direction dont une première extrémité porte un volant de direction manipulé par le conducteur et dont une seconde extrémité est solidaire d'un dispositif de braquage, par exemple constitué d'un montage à pignon et crémaillère ;
- un motoréducteur composé d'un moteur électique et d'un réducteur, par exemple à roue et vis sans fin, dont la roue de sortie attaque un organe d'accouplement disposé entre le motoréducteur et la colonne ;
- un calculateur qui reçoit les signaux de mesure de divers capteurs, comme ceux d'un capteur de couple qui permet de mesurer le couple exercé par le conducteur sur la colonne de direction, et qui élabore un signal de commande de l'alimentation du moteur électrique du motoréducteur d'assistance ; de façon à assister l'effort exercé par le conducteur sur le volant, caractérisé en ce que la direction assistée comporte de plus un système antivol qui permet, à l'aide d'un verrou, de bloquer la colonne de direction, système antivol comportant un moyen de déplacement d'une partie mobile qui, dans une première position active vient augmenter l'inertie du dispositif d'assistance, et qui dans une seconde position inactive, libère le dispositif d'assistance.

2. Dispositif selon la revendication 1, caractérisé en ce que le système antivol comporte un organe de blocage mécanique disposé sur une partie mobile ou solidaire du motoréducteur d'assistance de direction.

3. Dispositif selon la revendication 1, caractérisé en ce que l'organe de blocage mécanique vient en contact avec une partie mobile de l'organe d'accouplement du motoréducteur sur la colonne de direction.

4. Dispositif selon l'une des revendications 1 à 3, caractérisé en ce que l'organe de blocage est mobilisé entre deux positions fixes active et inactive relativement au blocage de la colonne de direction à l'aide d'un actionneur électrique.

5. Dispositif selon la revendication 4, caractérisé en ce qu'il comporte un circuit de pilotage de l'alimentation électrique de l'actionneur qui reçoit une entrée (40) connectée à la sortie de commande d'un dispositif à serrure comme une serrure de colonne ou un lecteur de badge ou de transpondeur, ledit circuit de pilotage comportant un moyen d'alimentation de l'actionneur qui est commandé par ledit signal (40).

6. Dispositif selon la revendication 5, caractérisé en ce que le moyen d'alimentation comporte aussi une entrée d'un signal (39) d'autorisation de verrouillage, produit par un calculateur (28) de direction électrique assistée qui indique que la direction électrique assistée est inactive de façon à alimenter l'actionneur électrique (37) dans des états convenables de la direction assistée.

7. Dispositif selon l'une des revendications précédentes, caractérisé en ce qu'il est contenu dans un premier boîtier (50) en matériau moulé sur lequel viennent se disposer respectivement un boîtier (61) servant de carcasse moteur, un boîtier (66) servant de support au calculateur (28,29,36) et (82) servant de boîtier au système antivol, et un boîtier (80) servant de boîtier au capteur de couple (23).

8. Dispositif selon la revendication 7, caractérisé en ce que le boîtier (66) porte un circuit imprimé sur lequel est réalisé le calculateur (28), le circuit de puissance d'alimentation du moteur et de l'embrayage de la direction assistée électrique, le circuit de pilotage de l'actionneur (36) d'antivol et au moins un connecteur (69) de liaison par des traverses (73) aux traverses correspondantes (74-76) d'alimentation électrique de la bobine (54) de l'embrayage électromagnétique (30), et des bobines du stator du moteur électrique.

9. Dispositif selon la revendication 7, caractérisé en ce que l'organe de blocage mécanique (38) vient verrouiller les dents d'une couronne (34), servant d'organe d'accouplement de la direction assistée électrique sur la colonne de direction, de façon à empêcher le mouvement de celle-ci.

10. Dispositif selon la revendication 9, caractérisé en ce que la couronne dentée (34) est montée par son alésage (42) sur une bague (41) de limitation du couple exercé.

11. Dispositif selon la revendication 1, caractérisé en ce que l'organe de blocage mécanique vient en contact avec une couronne dentée solidaire de la vis du réducteur à roue et vis sans fin.

12. Dispositif selon l'une des revendications précédentes, caractérisé en ce qu'il est à l'état de repos en état bloqué, la colonne de direction étant bloquée et il est à l'état actif en état débloqué, la colonne de direction étant libérée.

13. Dispositif selon la revendication 12, caractérisé en ce qu'il comporte un moyen de diagnostic de défaillance de l'antivol qui comporte un moyen pour produire une impulsion d'assistance, un moyen de détection de l'état libéré de la colonne de direction, ledit moyen pouvant être constitué par un capteur d'angle volant ou par un capteur de couple ; le moyen de diagnostic produisant un signal de défaillance si le moyen de détection détecte un état libéré de la colonne de direction alors que l'antivol est à l'état de repos ou au contraire si le moyen de détection ne détecte pas un état libéré de la colonne de direction, alors que l'antivol est à l'état actif.
